# FASCICULE DE BREVET EUROPEEN

(11) **EP 1 492 936 B1**
(45) Date de publication et mention de la délivrance du brevet: **11.01.2006**
(21) Numéro de dépôt: 03727605.2
(22) Date de dépôt: 21.03.2003
(51) Int. Cl.: E21B 17/01, E21B 47/10, F16L 11/08, G01M 3/28

(54) **PROCEDE ET DISPOSITIF POUR DETECTER DES FUITES DANS L'ANNULAIRE D'UNE COLONNE MONTANTE**
VERFAHREN UND VORRICHTUNG ZUR LECKERKENNUNG IM RINGRAUM EINES STEIGROHRES
METHOD AND DEVICE FOR DETECTING LEAKS IN AN ANNULUS OF A RISER

(30) Priorité: 28.03.2002 FR 0203930
(43) Date de publication de la demande: 05.01.2005
(73) Titulaire: Technip France, 92400 Courbevoie (FR)
(72) Inventeur: RIGAUD, Jean, F-76000 Rouen (FR)
(74) Mandataire: Bertrand, Didier
(86) Numéro de dépôt international: PCT/FR2003/000908
(87) Numéro de publication internationale: WO 2003/083251

(56) Documents cités:
- EP-A- 0 695 902
- GB-A- 2 320 760
- US-A- 3 972 223
- US-A- 6 026 862
- US-B1- 6 171 025

## Description

La présente invention concerne un procédé et un dispositif pour détecter des caractéristiques d'un fluide présent dans un annulaire d'une colonne montante disposée en mer, entre la surface et le fond de la mer.

Les conduites flexibles utilisées en tant que colonne montante (riser en anglais) disposée entre la surface et le fond de la mer sont bien connues des spécialistes et répondent à des spécifications qui sont répertoriées notamment dans les recommandations appropriées de l'American Petroleum Institute (API). Une conduite flexible relie un système flottant (plateforme, barge, etc...) et une tête de puits ou un manifold disposé sur le fond de la mer. La zone où la partie de conduite flexible repose sur le fond marin est la zone appelée point de contact (touch down point). La partie de la conduite flexible reposant sur le fond marin entre le point de contact et la tête de puits et/ou autre organe de raccordement est appelée usuellement par l'expression anglaise "Flow Line". La conduite flexible est constituée par une structure plus ou moins complexe et comprend généralement dans la forme de réalisation la plus simple, de l'extérieur vers l'intérieur, une gaine polymérique externe, des nappes d'armures constituées chacune par un enroulement à pas long d'un fil de forme, et une gaine polymérique interne dite gaine de pression. L'espace délimité entre les deux gaines polymériques constitue l'annulaire dans lequel sont disposées les nappes d'armures et une voûte de pression lorsque la conduite flexible en comprend une.

Le fluide circulant dans le tuyau ou alésage central de la conduite (Bore en anglais) comprend un certain nombre de composants qui peuvent diffuser depuis le tuyau central vers l'annulaire, tels que par exemple des gaz comme l'H₂S, le CO₂, le CH₄, de l'eau, dont certains peuvent se condenser et remplir plus ou moins partiellement l'annulaire de la conduite flexible. De plus, l'eau de mer entourant la conduite flexible peut être amenée également à envahir l'annulaire soit par diffusion, soit par suite d'une déchirure de la gaine polymérique externe et provoquer de multiples causes.

Ainsi, lorsque l'annulaire est envahi par au moins un des éléments notamment rappelés ci-dessus, il peut se produire une corrosion des fils métalliques présents dans l'annulaire, qui, au bout d'un certain temps, peut entraîner la destruction desdits fils métalliques et par suite celle de la conduite flexible. Lorsque c'est l'eau de mer qui pénètre et reste dans l'annulaire, il peut se produire des phénomènes de corrosion similaires à ceux précédemment cités.

Quand l'annulaire est plein par l'eau de mer ou par de la condensation ou les gaz ou quand il est totalement vide, il existe des moyens pour reconnaître ces deux situations. Mais, lorsque l'annulaire l'est partiellement, on ne savait pas s'il était partiellement rempli ni quel était le fluide de remplissage.

Le document US 3972223 montre une conduite montante équipée d'un capteur de pression détectant des pics de pression annulaire résultant d'impacts sur la conduite. Le document GB 2320760 montre un capteur de la pression régnant dans l'annulaire d'une conduite terrestre.

La présente invention a pour objet un procédé pour déterminer au moins des caractéristiques du fluide de remplissage de l'annulaire, ainsi qu'un dispositif pour la mise en oeuvre du procédé. De plus, il est maintenant possible non seulement de calculer le degré de remplissage ou d'envahissement de l'annulaire mais également d'obtenir des informations sur la nature du fluide de remplissage.

Le procédé selon l'invention est caractérisé en ce qu'il consiste au moins à détecter et à mesurer la pression de fluide dans l'annulaire et à la comparer avec la pression hydrostatique régnant à l'extérieur de ladite colonne montante, de manière à déterminer une éventuelle différence entre la pression mesurée et la pression hydrostatique, ladite différence de pression étant représentative du degré d'envahissement dudit annulaire par ledit fluide.

De la sorte, il sera possible de tenir compte de cet envahissement pour prévoir une éventuelle intervention sur la conduite flexible. Cette intervention peut être l'évacuation du fluide de remplissage afin d'éviter, dans le cas d'un envahissement par l'eau de mer, une corrosion trop rapide des fils métalliques.

Selon une autre caractéristique de l'invention, la salinité du fluide de remplissage est détectée afin de déterminer s'il est constitué par l'eau de mer ou par un produit de condensation.

Le dispositif selon l'invention est conçu pour détecter au moins une des caractéristiques physiques d'un fluide présent dans l'annulaire d'une colonne montante disposée en mer entre la surface et le fond de la mer, ledit dispositif étant caractérisé en ce qu'il comprend au moins un capteur de la pression du fluide régnant dans ledit annulaire, le capteur étant, de préférence, au voisinage du point de contact de la conduite flexible sur le fond marin.

Une autre caractéristique de la présente invention est de monter en outre un capteur de salinité dans l'annulaire, de préférence près du capteur de pression, le capteur de salinité indiquant s'il s'agit de l'eau de mer et dans la négative de permettre de conclure que le fluide d'envahissement est un produit de condensation.

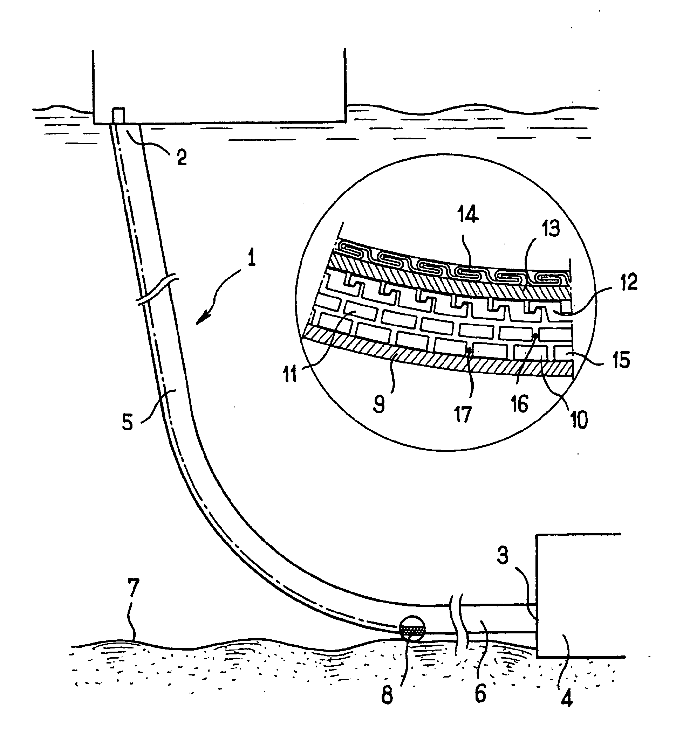

D'autres avantages et caractéristiques ressortiront à la lecture d'un mode de réalisation préféré de l'invention ainsi que du dessin annexé sur lequel la figure unique représente une vue schématique d'une colonne montante immergée en mer avec un détail d'une structure d'une conduite flexible et du positionnement des capteurs dans l'annulaire.

Une colonne montante ou riser est, dans le cadre de la présente invention, constituée par une conduite flexible 1 dont une extrémité 2 est connectée à une structure flottante F disposée à la surface de la mer et dont l'autre extrémité 3 est reliée à une tête de puits de forage et/ou à un connecteur ou manifold sous-marins, désignés collectivement par la référence 4. La conduite flexible comprend une partie 5 légèrement inclinée sur la verticale et une partie horizontale 6 reposant sur le fond de la mer 7 et qui est appelée par les spécialistes un "flow line". La zone de raccordement entre les deux parties 5 et 6 est la zone de contact 8 où la conduite flexible 1 vient en contact avec le fond marin 7, la zone de contact 8 constituant ce que les spécialistes appellent le "Touch Down Point".

La conduite flexible 1 est constituée par un certain nombre d'éléments structurels qui, de l'extérieur vers l'intérieur, comprennent une gaine polymérique externe 9, au moins deux nappes d'armures 10, 11 et une gaine polymérique interne 13. Suivant le type de conduite flexible utilisée, cette dernière comprend également une voûte de pression 12 et une carcasse métallique interne 14. Les détails des éléments structurels et les types de conduite flexible sont donnés dans les diverses recommandations de l'API.

Entre les gaines externe 9 et interne 13 est délimité ce qu'il est convenu d'appeler un annulaire qui est désigné par la référence 15 et dans lequel sont disposées au moins les nappes d'armures et la voûte de pression lorsqu'elle existe.

Dans la conduite flexible 1 et plus particulièrement dans l'alésage central ou "bore" circule un fluide, du pétrole brut par exemple comprenant un certain nombre de composants tels que l'H l'H₂S, le CO₂, le CH₄ de l'eau, etc... qui sont susceptibles de diffuser à travers des éléments structurels de la conduite flexible et venir dans l'annulaire 15 dans lequel il peut y avoir formation d'une condensation comme celle de l'eau par exemple.

Une autre cause de la présence d'eau dans l'annulaire 15 est la non étanchéité de la gaine externe 9, la non étanchéité pouvant être le résultat d'une déchirure, pour une raison quelconque, de ladite gaine externe 9. Dans ces conditions, l'eau de mer pénètre et envahit l'annulaire 15.

Selon la présente invention, un et de préférence deux capteurs 16 et 17 sont disposés dans l'annulaire 15 à proximité l'un de l'autre et dans la zone de contact 8. Le capteur 16 détecte et éventuellement mesure la pression régnant dans l'annulaire 15, alors que le détecteur 17 détecte et éventuellement mesure la salinité du fluide présent dans l'annulaire 15.

Le procédé consiste, après détection, à comparer la pression de l'annulaire avec la pression hydrostatique régnant autour de la conduite flexible 1. Lorsque la pression de l'annulaire est égale à la pression hydrostatique, alors on a la certitude que l'annulaire est totalement envahi ou inondé par un fluide eau de mer ou produit de condensation. Par contre, lorsque les deux pressions annulaire et hydrostatique sont différentes et particulièrement lorsque la pression de l'annulaire est inférieure à la pression hydrostatique, il devient possible de déterminer ou de calculer la hauteur d'inondation à l'aide de la différence entre les pressions.

La nature du fluide d'envahissement est déterminée par le capteur 17. Lorsque le degré de salinité S est proche ou égal à zéro, alors le fluide d'inondation est considéré comme étant un produit de condensation. Par contre, lorsque S est très supérieur à zéro ou proche de la salinité de mer environnante, alors le fluide d'inondation peut être considéré comme étant de l'eau de mer. Dans ces conditions, la probabilité d'une fuite accidentelle à travers la gaine externe est relativement importante et une intervention sur la conduite flexible est sinon indispensable du moins souhaitable pour éviter une détérioration à terme de la conduite flexible.

Dans ce qui précède, le ou les capteurs sont disposés dans l'annulaire et à proximité du point de contact de la conduite flexible. Lorsque cette dernière comprend un embout (end fitting en anglais) intermédiaire au voisinage du point de contact, il est possible de monter le ou les capteurs de mesure dans ledit embout intermédiaire dès lors que les mesures effectuées par ce ou ces capteurs sont équivalentes à celles qui sont obtenues dans l'annulaire.

Selon un mode de réalisation alternatif, on insère le capteur de pression 16 dans la longueur courante de la colonne montante. La mesure différentielle entre la pression régnant dans l'annulaire et la pression hydrostatique externe régnant à la profondeur à laquelle est située le capteur permet de déterminer le degré d'envahissement de l'annulaire de la partie de colonne montante située au-dessus du capteur. La pression hydrostatique interne peut être déduite de la position estimée du capteur ou peut être mesurée par un capteur spécifique. Ce mode de réalisation permet par exemple de mesurer l'envahissement de l'annulaire dans les zones dynamiques, notamment la partie haute de la colonne en dessous du raidisseur, ou dans une configuration de colonne montante en S, en.dessous de la vague (zone de point d'inflexion).

## Revendications

1. Procédé pour détecter des caractéristiques d'un fluide présent dans un annulaire d'une colonne montante flexible disposée en mer, entre la surface et le fond de ladite mer, **caractérisé en ce qu'**il consiste au moins à détecter et à mesurer la pression de fluide dans l'annulaire et à la comparer avec la pression hydrostatique régnant à l'extérieur de ladite colonne montante, de manière à déterminer une éventuelle différence entre la pression mesurée et la pression hydrostatique, ladite différence de pression étant représentative du degré d'envahissement dudit annulaire par ledit fluide.

2. Procédé selon la revendication 1, **caractérisé en ce qu'**il consiste en outre à mesurer la salinité du fluide présent dans l'annulaire (15).

3. Dispositif pour détecter au moins des caractéristiques physiques d'un fluide dans l'annulaire d'une colonne montante flexible disposée en mer entre la surface et le fond de ladite mer (7), **caractérisé en ce qu'**il comprend à l'intérieur de l'annulaire (15) au moins un capteur de la pression (16) du fluide régnant dans ledit annulaire (15), ledit capteur (16) étant monté dans un embout intermédiaire de la conduite flexible, situé à proximité du point de contact de ladite conduite flexible avec le fond de la mer.

4. Dispositif selon la revendication 3, **caractérisé en ce qu'**il comprend en outre un capteur de salinité (17) du fluide dans l'annulaire (15), ledit capteur de salinité (17) étant monté dans un embout intermédiaire de la conduite flexible, situé à proximité du point de contact de ladite conduite flexible avec le fond de la mer.

## Patentansprüche

1. Verfahren zum Detektieren der Charakteristika bzw. Merkmale eines Fluids, das in einem Ringraum eines flexiblen, im Meer angeordneten Steigrohrs vorliegt, zwischen der Oberfläche und dem Meeresboden, **dadurch gekennzeichnet, daß** es wenigstens aus dem Detektieren und Messen des Fluiddrucks im Ringraum und dem Vergleichen mit dem hydrostatischen Druck besteht, der außerhalb des Steigrohrs vorherrscht, um einen gegebenen, falls vorhandenen Unterschied zwischen dem gemessenen Druck und dem hydrostatischen Druck zu bestimmen, wobei der Druckunterschied für den Grad eines Einbruchs bzw. Einfalls des Fluids in den Ringraum repräsentativ ist.

2. Verfahren nach Anspruch 1, **dadurch gekennzeichnet, daß** es darüber hinaus in dem Messen des Salzgehalts des Fluids besteht, das im Ringraum (15) vorhanden ist.

3. Vorrichtung zum Detektieren von wenigstens den physikalischen Charakteristika bzw. Merkmalen eines Fluids im Ringraum eines flexiblen Steigrohrs, das im Meer zwischen der Oberfläche und dem Boden des Meers (7) angeordnet ist, **dadurch gekennzeichnet, daß** es im Inneren des Ringraums (15) wenigstens einen Druckdetektor (16) des Fluids umfaßt, welches in den Ringraum (15) vorliegt, wobei der Detektor (16) in einem zwischenliegenden Ansatzstück der flexiblen Leitung montiert ist, welches nahe dem Kontaktpunkt der flexiblen Leitung mit dem Meeresboden angeordnet ist.

4. Vorrichtung nach Anspruch 3, **dadurch gekennzeichnet, daß** sie darüber hinaus einen Salzgehaltdetektor (17) des Fluids in dem Ringraum (15) umfaßt, wobei der Salzgehaltdetektor (17) in einem zwischenliegenden Ansatzstück der flexiblen Leitung montiert ist, welches in der Nähe des Kontaktpunkts der flexiblen Leitung mit dem Meeresboden angeordnet ist.

## Claims

1. Method for detecting characteristics of a fluid present in an annulus of a flexible riser located at sea, between the surface and the bottom of the said sea, **characterized in that** it consists at least in detecting and in measuring the fluid pressure in the annulus and in comparing it with the hydrostatic pressure obtaining outside the said riser, so as to determine any difference there might be between the measured pressure and the hydrostatic pressure, the said pressure difference being representative of the extent to which the said annulus has been invaded by the said fluid.

2. Method according to Claim 1, **characterized in that** it further consists in measuring the salinity of the fluid present in the annulus (15).

3. Device for detecting at least physical characteristics of a fluid in the annulus of a flexible riser located at sea between the surface and the bottom of the said sea (7), **characterized in that** it comprises, inside the annulus (15), at least a sensor of the pressure (16) of the fluid obtaining in the said annulus (15), the said sensor (16) being mounted in an intermediate fitting of the flexible pipe, which intermediate fitting is situated in the proximity of the touchdown point where the said flexible pipe meets the sea bed.

4. Device according to Claim 3, **characterized in that** it further comprises a salinity sensor (17) sensing the salinity of the fluid in the annulus (15), the said salinity sensor (17) being mounted in an intermediate fitting of the flexible pipe, which intermediate fitting is situated in the proximity of the touchdown point where the said flexible pipe meets the sea bed.
